# EUROPEAN PATENT APPLICATION

(11) **EP 1 720 030 A1**
(43) Date of publication of application: **08.11.2006**
(21) Application number: 05009762.5
(22) Date of filing: 04.05.2005
(51) Int. Cl.: G01S 1/00, G01S 5/14

(54) **Transfer of global positioning system assistance data**

(71) Applicant: Sony Ericsson Mobile Communications AB, 221 88 Lund (SE)
(72) Inventor: Tryding, Sven, 224 60 Lund (SE); Jendbro, Magnus, 224 73 Lund (SE); Lindoff, Mats, 224 36 Lund (SE); Westholm, Robert, 226 49 Lund (SE)
(74) Representative: Asketorp, Göran

(57) **Abstract**

Methods and devices (1,3) for determining the position of an electronic device (3), which obtains global positioning system signals from a satellite (4) based global positioning system. A terminal (1) is connected to a network (2) having access to global positioning system assistance data, which is transferred to the electronic device (3) for performing a position calculation based on the global positioning system signals and the global positioning system assistance data.

## Description

### Technical Field of the Invention

The present invention generally relates to a combination of an electronic device and a terminal. More particularly, it relates to methods and devices for determining the accurate position of an electronic device, such as a peripheral accessory device, by means of global positioning system signals and global positioning assistance data.

### Description of Background Art

Portable standalone GPS devices and portable cellular telephones are well known in the art. In the early years the standalone GPS devices and the portable cellular telephones were used separately.

The GPS devices may include GPS receivers for ascertaining a position of the GPS device itself by making use of the well known Global Positioning System (abbreviated GPS). As is well known, by measuring the travel time of signals transmitted from GPS satellites, a GPS device can determine its distance from each satellite. With distance measurements from four different satellites, the GPS device can calculate its position.

Portable cellular telephones, on the other hand, were used for communications services within a wireless communications network such as the well known Global System for Mobile Communications (abbreviated GSM). Thus, if a user of a standalone electronic GPS device wished to relay his or her position information to a remote station, the user was required to locate suitable communication devices prior to being able to do so. It turned out that this situation was sometimes undesirable.

It turned out that the performance of standalone GPS devices was not always satisfactory. Typically, a conventional standalone GPS receiver must search for satellite signals and decode the satellite navigation messages before computing its position. These tasks normally require strong signals and long processing time. Consequently, it turned out that the performance of the conventional standalone electronic GPS devices may be poor in e.g. RF-shadowed environments. Furthermore, since the process of receiving, decoding, and processing GPS signals directly from the GPS satellites was slow, it occasionally took a standalone GPS device long time to arrive at the location position of the GPS device. Yet further, these GPS devices may consume excessive power, thereby quickly draining the battery.

At the same time, there was a development towards increasing the functionality of portable cellular telephones. As a consequence, it was eventually proposed to integrate a GPS receiver into a portable cellular telephone. Such portable cellular telephone can have, in addition to the GPS capability, access to so-called GPS Assistance Data, whose format and transfer is standardized by the 3^{rd} Generation Partnership Project (3GPP) organization (see 3GPP TS 04.31, Rel-6). In this way, the wireless network, such as GSM, can assist the GPS receiver (for that reason: Assisted GPS (AGPS)) by providing, among other data, an initial approximate position of the GPS receiver and the satellite ephemeris and clock information. As a consequence, as compared to conventional standalone GPS devices, which are unassisted, the GPS receiver integrated into the cellular telephone can utilize weaker signals and/or more quickly determine its position. Furthermore, assisted GPS may enable enhanced accuracy, availability, and coverage of the position service.

While cellular telephones having integrated GPS receivers are widespread and well known today, the expense, bulk, and power consumption associated with such combination devices may not appeal to all customers at the time of purchase. For different reasons, some customers may desire only the functionality of a GPS device or the functionality of a portable cellular phone at the time of purchase, and may later want to add additional functionality. It therefore seems that there has arisen a need for an alternative combination of a GPS device and a cellular phone.

It is with respect to these considerations and others that the present invention has been made. The present invention seeks to e.g. mitigate, alleviate or eliminate one or more of the above-identified deficiencies in the art and disadvantages singly or in combination.

### Summary of the Invention

It is an object of the present invention to provide improved methods and devices for determining the position of an electronic device.

According to a first aspect there is provided a method performed by an electronic device for determining the position thereof, wherein the method comprises obtaining global positioning system signals from a satellite based global positioning system; maintaining a communication with a terminal connected to a network having access to global positioning system assistance data; receiving global positioning system assistance data from said terminal; and performing a position calculation based on the global positioning system signals and the global positioning system assistance data for generating position data pertaining to said electronic device.

The method may also comprise, before the step of receiving, transmitting a request to the terminal for requesting the terminal to acquire the global positioning system assistance data from the wireless network and to further transfer the global positioning system assistance data to the electronic device. For instance, this request may be a data command. Additionally, the method may comprise, after the step of transmitting the request, receiving a notification from said terminal that said terminal allows for the provision of global positioning system assistance data to the electronic device.

Furthermore, progress information about the status of the position calculation may be transmitted to the terminal.

Moreover, the position data pertaining to the electronic device may be transmitted to the terminal.

The satellite based global positioning system may e.g. be GPS, GLONASS or GALILEO. Furthermore, the electronic device may e.g. be a peripheral accessory device such as a headset. Moreover, the terminal may e.g. be a mobile telephone, a smartphone or a communicator.

According to a second aspect there is provided a method performed by a terminal for assisting in determining the position of an electronic device, the electronic device having access to global positioning system signals from a satellite based global positioning system, wherein the method comprises acquiring global positioning system assistance data from a network having access to global positioning system assistance data; maintaining a communication with the electronic device; and transmitting said global positioning system assistance data from the terminal to the electronic device.

The method may also comprise receiving a request from the electronic device, said request requesting the terminal to acquire global positioning system assistance data from the network and to transfer the global positioning system assistance data to the electronic device. Additionally, the method may also comprise, after the step of receiving the request, transmitting a notification to said electronic device that said terminal allows for the provision of global positioning system assistance data to the electronic device.

Furthermore, the step of acquiring global positioning system assistance data from the network may be performed by periodically downloading the global positioning system assistance data. Possibly this is performed in response to receiving the request from the electronic device.

Yet further, the step of transmitting the global positioning system assistance data from the terminal to the electronic device may comprise transmitting a message which encapsulates said global positioning system assistance data into the message.

The terminal may also transmit a request for requesting the electronic device to return progress information about the status of a position calculation and eventually position data pertaining to said electronic device.

The satellite based global positioning system may e.g. be GPS, GLONASS or GALILEO. Furthermore, the electronic device may e.g. be a peripheral accessory device such as a headset. Moreover, the terminal may e.g. be a mobile telephone, a smartphone or a communicator.

According to a third aspect there is provided a computer program product comprising computer program code means for executing the method performed by an electronic device for determining the position thereof, when said computer program code means are run by a device having computer capabilities.

According to a fourth aspect there is provided a computer program product comprising computer program code means for executing the method performed by a terminal for assisting in determining the position of an electronic device, when said computer program code means are run by a device having computer capabilities.

According to a fifth aspect there is provided an electronic device configured for receiving global positioning system signals from a satellite based global positioning system. The electronic device comprises a connecting device operable to establish and maintain communication with a terminal for receiving global positioning system assistance data from said terminal, and a processing unit configured to perform a position calculation based on said global positioning system signals and said global positioning system assistance data for generating position data pertaining to said electronic device.

The connecting device may be a transceiver configured for short-range communication or a connector for connecting the electronic device to a terminal over a wired connection.

Furthermore, the electronic device may be configured for carrying out the method according to the first aspect.

According to a sixth aspect there is provided a terminal configured to acquire global positioning assistance data from a network. The terminal comprises a connecting device configured to transmit said global positioning assistance data to an electronic device.

The connecting device may be a transceiver configured for short-range communication or a connector for connecting the terminal to an electronic device over a wired connection.

Furthermore, the terminal may be configured for carrying out the method according to the second aspect.

Further embodiments of the present invention are defined in the dependent claims.

It should be emphasized that the term "comprises/comprising" when used throughout this specification and claims is taken to specify the presence of stated features, integers, steps or components but does not preclude the presence or addition of one or more other features, integers, steps, components or groups thereof. In addition, singular references do not exclude a plurality.

### Brief Description of the Drawings

Further objects, features and advantages of the invention will appear from the following detailed description of different embodiments of the invention, reference being made to the accompanying drawings, in which:
Fig. 1 is a general schematic view of a mobile terminal connected to a network and various peripheral electronic GPS devices.
Fig. 2 is a block diagram of an embodiment of a mobile terminal of Fig. 1.
Fig. 3 is a block diagram of an embodiment of a peripheral electronic GPS device of Fig. 1.
Fig. 4 is a flow-chart of an embodiment of a method for determining the position of a peripheral electronic GPS device of Fig. 1.
Fig. 5 is a flow-chart of another embodiment of a method for determining the position of a peripheral electronic GPS device of Fig. 1.

### Detailed Description of Embodiments

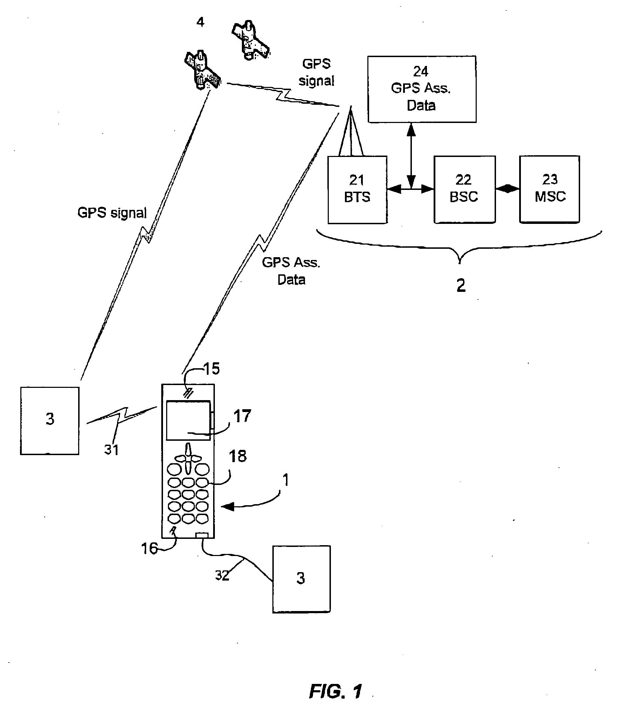

Fig. 1 illustrates a communication device embodied as a mobile terminal 1 connected to a network 2. The invention could be implemented into any communication device that is capable of acquiring GPS Assistance Data 24 from a wireless network 2. Examples of devices in which the invention may be implemented may e.g. include communication equipment, such as portable or handheld mobile radio communication equipment, a mobile radio terminal, a mobile telephone, a cellphone, a pager, a communicator, an electronic organizer, a smartphone and a computer. The invention may also be practiced in electronic equipment in a vehicle. However, for simplicity of presentation, reference will hereinafter be made to a mobile terminal 1, which should not be interpreted restrictively, but rather as an example.

Fig. 1 also illustrates that the mobile terminal 1 may be connected to various peripheral electronic devices 3, via a short-range wireless link 31, such as a radio link or an IR (infrared) link, and/or via a wired connection 32, such as a serial cable. According to the principles of this embodiment of the invention, the peripheral electronic devices 3 include a GPS capability. Examples of peripheral electronic GPS devices in which the invention may be implemented may e.g. include various peripheral accessory devices such as headsets, Personal Digital Assistants (PDA:s), computers, vehicle tracking devices, watches, portable standalone devices with GPS capability, etc.

The wireless network 2 serves the mobile terminal 1. The network 2 may comprise network elements such as a base transceiver station (BTS) 21, a base station controller (BSC) 22, and a mobile switching center (MSC) 23. In this embodiment, the wireless network 2 further has access to or is capable of calculating GPS Assistance Data 24. By way of example, the GPS Assistance Data may reside in a remote AGPS server, which simultaneously monitors signals from GPS satellites 4 by means of a GPS receiver. However, for the purpose of the teachings of this specification, it is not important where in the network 2 the GPS Assistance Data 24 originates or resides, and will not be further explained here.

GPS Assistance Data 24 is the same for all mobile terminals within a given location area (commonly known as the cell). Accordingly, the GPS Assistance Data 24 is not specific to any one mobile terminal, but can instead be used by a plurality of mobile terminals within a common given location area. The GPS Assistance Data 24 is composed of data that can be delivered from the wireless network 2 to the mobile terminal 1. The GPS Assistance Data 24 may e.g. comprise one or several of the following elements: a) number of satellites in view, b) reference time, c) reference location (i.e. the serving BTS location), d) Satellite ID, Ephemeris, clock corrections, etc., e) optional differential GPS corrections (DGPS corrections). The transfer of the GPS assistance data 24 from the wireless network 2 to the mobile terminal 1 can e.g. be accomplished in accordance with the 3GPP TS 04.31 Rel-6 specification.

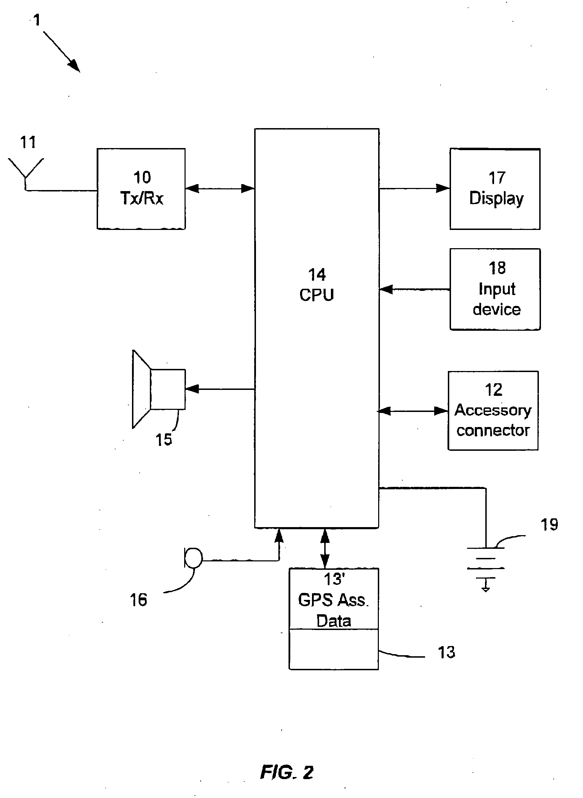

Fig. 2 illustrates certain components, which may be integrated in the mobile terminal 1. A transmitter/receiver (Tx/Rx) unit 10 .is operable for communication with external communication equipment. The Tx/Rx unit 10 may comprise a transceiver for communicating, via an antenna 11, with a communication network 2 (Fig. 1), e.g. according to any communication technology such as GSM (Global System for Mobile communication), UMTS (Universal Mobile Telecommunication System), CDMA2000 (Code Division Multiple Access), PDS (Personal Digital System), or PDC (Personal Digital Cellular). The Tx/Rx unit 10 may in addition be configured for short-range radio communication, such as Bluetooth®, WLAN (Wireless Local Area Network), or ZigBee®. Such short-range communication may be provided for enabling a wireless connection to a peripheral electronic device 3 (Fig. 1). Additionally or alternatively, the Tx/Rx unit 10 may comprise an IR (Infrared) transmitter/receiver. Furthermore, an accessory connector 12 may be provided for enabling a wired connection to a peripheral electronic device 3 (Fig. 1).

The mobile terminal 1 may further comprise various types of memories; which are jointly referenced by reference numeral 13. The memory 13 may comprise a RAM (Random Access Memory), a ROM (Read Only Memory), a flash memory, a non-volatile memory, a SIM (Subscriber Identity Module) etc. Data instructions.or software for various functions of the mobile terminal 1 may be stored in the memory 13. Such functions may e.g. comprise a camera, a messaging, a media player, or a phonebook function. These functions are provided for the interaction or benefit of a user. However, other functions may be invisible for the user, such as the actual setting up of a telephone call and/or data communication sessions etc. Furthermore, the memory 13 may be capable of storing (in a portion 13') GPS Assistance Data 24 (Fig.1). As mentioned previously, the GPS Assistance data 24 (Fig. 1) may be transferred to the mobile terminal 1 from the wireless network 2 e.g. according to the 3GPP TS 04.31 Rel-6 specification. The transfer may be pushed or requested by the user of the mobile terminal 1 or requested by the mobile terminal 1 itself.

The mobile terminal 1 may also comprise a CPU (Central Processing Unit) 14 for controlling the operation and function of the mobile terminal 1.

The mobile terminal 1 typically also comprises a user interface, which may comprise a loudspeaker 15, a microphone 16, a display 17, and a user input device 18, all of which are connected to the CPU 14. The user input device 18 may e.g. comprise a keypad having conventional alphanumeric keys (i.e. 0-9, A-Z, and #, *). Furthermore, the user input device 18 may comprise other keys, joysticks, navigation keys etc. for operating the mobile terminal 1.

The mobile terminal 1 may further comprise a battery 19 or other source of electric power, such as mains connection, solar cells etc, for powering the various circuits that are required to operate the mobile terminal 1.

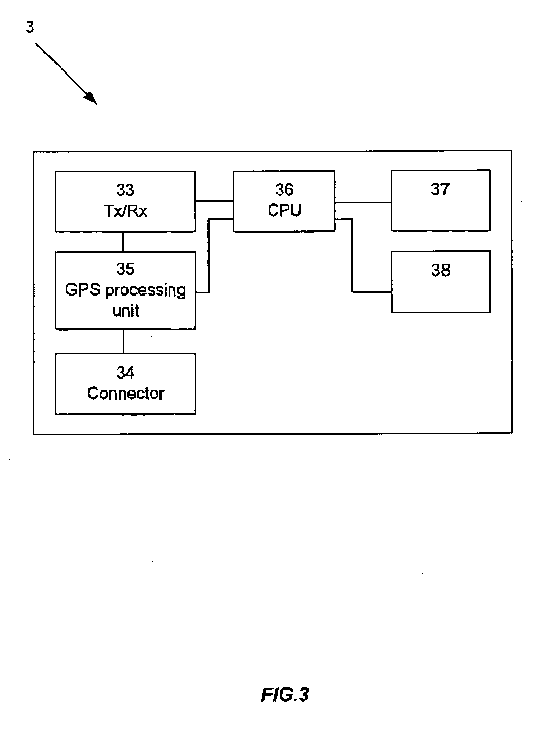

Fig. 3 illustrates certain components, which may be integrated in peripheral electronic devices 3, which are constructed and operated in accordance with this embodiment. A transmitter/receiver (Tx/Rx) unit 33 is operable for short-range communication, over link 31 (Fig. 1), with external communication devices, such as the terminal 1. The Tx/Rx unit 33 may comprise a transceiver for short-range communication, such as Bluetooth®, WLAN (Wireless Local Area Network), or ZigBee®. Such short-range communication may be provided for enabling a wireless connection to a terminal 1 (Fig. 1). Additionally or alternatively, the Tx/Rx unit 33 may comprise an IR transmitter/receiver. In addition, the Tx/Rx unit 33 is operable for receiving GPS signals from GPS satellites 4 (Fig. 1). The Rx unit 33 may accordingly comprise a GPS receiver that is configured to receive GPS signals from GPS satellites. Furthermore, a connector device 34 may be provided for enabling the establishment of a wired connection 32 to a terminal 1 (Fig. 1).

The peripheral electronic GPS device 3 may also comprise a GPS processing unit 35 connected to the Tx/Rx unit 33 and the connector 34. The GPS processing unit 35 may be adapted to the 3GPP TS 04.31 Rel-6 standard. In this way the GPS processing unit 35 may be configured to utilize any GPS Assistance Data that is transferred, via the wireless link 31 or the wired connection 32 (Fig. 1), to the peripheral electronic GPS device 3 from a terminal 1.

There are different alternatives for realizing the transfer of the GPS Assistance data from the terminal 1 to the peripheral electronic GPS device 3 over the wireless link 31 or over the wired connection 32. For instance, the GPS processing unit 35 may be adapted to use the NMEA (National Marine Electronics Association) 0183 protocol together with proprietary extension sentences. For example, the NMEA 0183 protocol could be extended by a further message that is configured to encapsulate the GPS Assistance Data. Furthermore, in some embodiments the GPS processing unit 35 may also be configured to initiate a request to the mobile terminal 1 to acquire GPS Assistance Data from the wireless network 2 and to further transfer this data to the peripheral electronic GPS device 3 once the mobile terminal 1 has acquired said GPS Assistance Data. This request may e.g. be accomplished by using either proprietary data commands, or the NMEA 0183 protocol with proprietary extension sentences, such as a certain added data command for initiating the request.

The GPS processing unit 35 may also be configured to perform a position calculation based on GPS signals received from the GPS satellites 4 (Fig.1) and GPS Assistance data received from the wireless network 2 via the terminal 1 (Fig. 1). This way position data pertaining to the peripheral electronic GPS device 3 can eventually be generated.

The peripheral electronic GPS device 3 may also comprise a CPU 36 for controlling the operation and function of the peripheral electronic GPS device 3.

The peripheral electronic GPS device 3 may further comprise various types of memories, which are jointly referenced by reference numeral 37. The memory 37 may comprise a RAM (Random Access Memory), a ROM (Read Only Memory), a flash memory, a non-volatile memory, etc.

The peripheral electronic GPS device 3 may also comprise a battery 38 or other source of electric power for powering the various circuits that are required to operate the peripheral device 3.

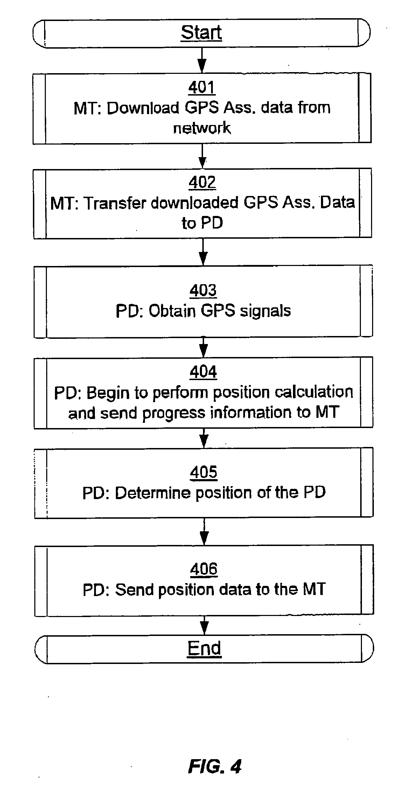

Reference is now made to Fig. 4 (in conjunction with Figs. 1 through 3), which illustrates an embodiment of a method for determining the position of the peripheral electronic GPS device (PD) 3. In this embodiment, the peripheral electronic GPS device 3 is in communication with a mobile terminal (MT) 1 either over a wireless link 31, such as Bluetooth®, or via a wired connection 32, such as a cable.

In step 401, the mobile terminal (MT) 1 initiates downloading of GPS Assistance Data 24 from the wireless network 2. Such data may be downloaded periodically to the mobile terminal or at the position request of the user of the mobile terminal or at the request of the mobile terminal itself. Thus, the data may already be available. If it is not available or too old, a new request for download can be made.

Next, since a communication is established and maintained between the mobile terminal 1 and the peripheral electronic GPS device 3 it is possible for the mobile terminal 1 to transfer the downloaded GPS Assistance data to the peripheral electronic GPS device 3 over the wireless link 31 or via the wired connection 32- This is accomplished in step 402. The step 402 of transferring GPS Assistance Data may e.g. be accomplished by encapsulating the GPS Assistance Data into a message that is sent from the mobile terminal 1 to the peripheral electronic GPS device 3. Such message may e.g. be sent as an extension to the NMEA 0183 protocol.

Thereafter, or simultaneously, the peripheral electronic GPS device 3 obtains GPS signals from the satellite based GPS system, in step 403.

Once the GPS Assistance data has been received by the peripheral electronic GPS device 3, the peripheral electronic GPS device 3 will begin, in step 404, to perform a position calculation based on the GPS signals received from the GPS satellites 4 and the GPS Assistance Data received from the wireless network 2 via the mobile terminal 1. The position calculation itself may e.g. be performed according to known principles. Optionally, the peripheral electronic GPS device may also monitor the progress of this position calculation and transmit progress information to the mobile terminal 1. The progress information hence comprises status information about the process of calculating the position of the peripheral electronic GPS device 3. The peripheral electronic GPS device 3 may e.g. send this progress information during its complete operation so that a user of the mobile terminal may benefit from constantly knowing how the position calculation develops.

When the position calculation is completed, which normally takes from a number of seconds up to a few minutes, the GPS processing unit 35 will have determined, in step 405, the position of the peripheral electronic GPS device 3 with improved sensitivity and/or speed based on the received GPS Assistance data as well as the received GPS signals. With assistance from the GPS Assistance Data, the peripheral electronic GPS device 3 may determine its position more quickly and efficiently than it would unassisted, thereby saving calculation time and power. Furthermore, by determining the position based on GPS Assistance Data as well as GPS signals it is possible to improve the position service in RF-shadowed environments, such as inside buildings. Moreover, if the peripheral electronic GPS device 3 is placed adjacent to the mobile terminal 1, for example within less than one meter (which is most often the case), it is also possible to estimate the position of the mobile terminal 1 accurately. Then, the position of the peripheral electronic GPS device 3 will aubstantially correspond to that of the mobile terminal 1.

Finally, in step 406, information about the determined position can be transmitted to the mobile terminal 1. This provides the user with the functionality of relaying the determined position information from the mobile terminal to other electronic communication equipments.

Consequently, with this embodiment of the invention, an inexpensive mobile terminal may be acquired at the time of purchase. If it is later desired to add positioning functionality to the mobile terminal, an accessory device may be acquired in the form of the peripheral electronic GPS device, in order to obtain a positioning functionality with low power consumption and high performance.

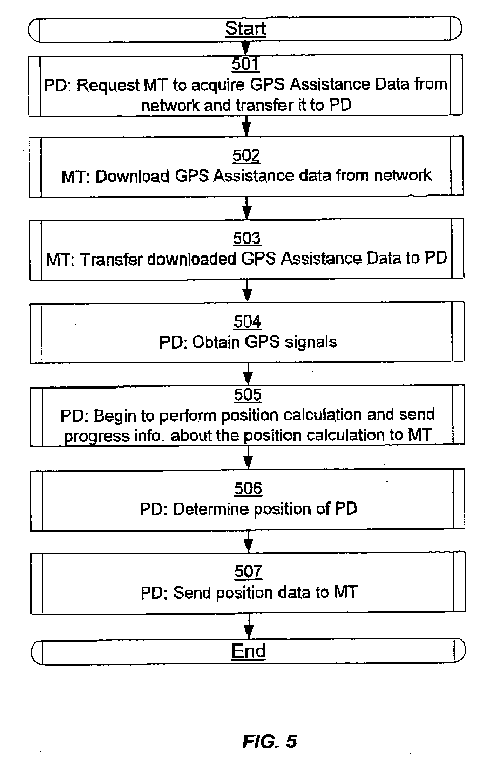

Turning now to Fig. 5, another embodiment of a method for determining the position of a peripheral electronic GPS device (PD) 3 will be described.

A communication is initially established between the peripheral electronic GPS device 3 and the mobile terminal (MT) 1. This is accomplished either over a wireless link 31, such as Bluetooth®, or via a wired connection 32, such as a cable.

In step 501, the peripheral GPS device 3 transmits a data command or the like to the mobile terminal 1 via the wireless link 31 or via the wired connection 32. This data command may e.g. be transmitted to the mobile terminal automatically. Alternatively, the data command may be transmitted to the mobile terminal at the request of the user of the peripheral GPS device or at the request of the peripheral GPS device itself. Furthermore, in some embodiments, the transmission of the data command may be automatically triggered in response to a startup procedure of the mobile terminal. The data command requests the mobile terminal to acquire GPS Assistance Data 24 from the wireless communication network 2 and to transfer the acquired GPS Assistance Data 24 to the peripheral electronic GPS device 3 once it has been acquired from the network 2 by means of the mobile terminal 1. This request may e.g. be achieved by using either proprietary data commands, or the NMEA 0183 protocol with proprietary extension sentences, such as a certain added data command for initiating the request. The mobile terminal 1 may be any mobile terminal within the short-range reach of the peripheral GPS device 3 and with which a wireless communication link has been established, such as a Bluetooth® connection. In some embodiments, the mobile terminal may accept or reject the use of itself for providing the GPS Assistance Data to the requesting peripheral electronic GPS device. In other embodiments, every mobile terminal within the reach of the short-range communication can be used, without interfering with the normal operation of the mobile terminal.

In response to receiving the request from the peripheral GPS device 3, the mobile terminal 1 may subsequently, in step 502, download GPS Assistance Data from the network 2. This can e.g. be accomplished in accordance with known principles according to the 3GPP TS 04-31 Rel-6 specification. Once the GPS Assistance Data has been downloaded from the wireless network 2, this downloaded GPS Assistance Data may be temporarily stored in memory 13 of the mobile terminal 1.

Once the GPS assistance data has been acquired by the mobile terminal 1, the method may proceed to the next step, i.e. step 503, in which said GPS assistance data is transferred to the peripheral GPS device 3 either via the wireless link 31 or via the wired connection 32. Again, this data transfer may e.g. be accomplished by using the NMEA 0183 protocol with proprietary extension sentences.

Thereafter, or simultaneously, i.e. in step 504, the peripheral electronic GPS device 3 obtains GPS signals from the satellite based GPS system.

Once the GPS Assistance Data has been transferred to the peripheral GPS device 3, the GPS processing unit 35 may begin to calculate the position of the peripheral device 3 based on the GPS signals received from the GPS satellites and the GPS Assistance Data received from the mobile terminal 1. The calculation itself may e.g. be performed by known principles and will not be explained further here. The position calculation is performed in step 505. Furthermore, progress information about the calculation may optionally be forwarded to the mobile terminal so that the user may be informed about the status of the position calculation.

When the position calculation is completed, which normally takes from a number of seconds up to a number of minutes, the GPS processing unit 35 will have determined, in step 506, the position of the peripheral electronic GPS device 3. With assistance from the GPS Assistance Data, the peripheral electronic GPS device 3 may determine its position with increased sensitivity and/or speed than it would unassisted, thereby saving calculation time and power. Furthermore, by determining the position based on GPS Assistance data as well as GPS signals it is possible to improve the position service in RF-shadowed environments. Again, if the peripheral electronic GPS device 3 is placed adjacent to the mobile terminal 1, it is also possible to estimate the position of the mobile terminal 1 accurately.

Finally, the generated position data may be transferred back to the mobile terminal, in step 507, so that a user may be informed about the position of the peripheral electronic GPS device 3. Furthermore, the user may benefit from the functionality of relaying this position information to other electronic communication equipment, either from the terminal or directly from the electronic device.

With this embodiment of the invention, an inexpensive mobile terminal may be acquired at the time of purchase. If it is later desired to add positioning functionality to the mobile terminal, a smart accessory device may be acquired in the form of the peripheral electronic GPS device that is operable to request GPS Assistance Data from the mobile terminal. In this way, it is possible to provide an improved and inexpensive combination of a mobile terminal and a peripheral electronic GPS device with a positioning functionality having relatively low power consumption and high performance.

It is an advantage with the present invention that the electronic device need not be provided with full GSM capability but may rely on an adjacent mobile terminal for obtaining assistance data for GPS system calculations, and the mobile terminal may rely on the electronic device for GPS calculations. In this way, a symbiosis is obtained in which each device is used for its specific purpose. It is a further advantage with the present invention that it provides an electronic device with high performance with regard to the positioning functionality as compared to conventional standalone GPS devices. It is a yet further advantage with this invention that it provides a flexible combination of an electronic device and a terminal. As one illustrative example, the invention provides flexibility in that a customer that has bought a single mobile telephone for communications services may later, if he wishes, add further functionality to the mobile telephone by adding positioning functionality provided by a peripheral GPS accessory device. In the same way, a customer that has purchased a single electronic device for positioning services may later add further functionality to the single electronic device by adding communications functionality provided e.g. by a mobile telephone. Yet further, it is an advantage with this invention that it provides a combination of an electronic device and a terminal that may at least maintain the performance and functionality as compared to known cellular telephones having an integrated GPS receiver for determining its position. It is also an advantage with the present invention that it may enable low power consumption. Even further, it is an advantage with this invention that it provides a combination of an electronic device and a terminal that is inexpensive.

The present invention has been described hereinabove with reference to specific embodiments of the invention. However, other embodiments than the above described are equally possible within the scope of the invention. For example, although the embodiments have been described with reference to the GPS system for global positioning it should be appreciated by persons ordinary skilled in the art that this invention could also be applicable within other satellite based positioning systems such as GLONASS or GALILEO. Different method steps than those described above, performing the method by hardware, software or a combination of hardware and software, may be provided within the scope of the invention. The different features and steps of the invention may be combined in other combinations than those described. The scope of the invention is only limited by the appended patent claims.

## Claims

1. A method performed by an electronic device for determining the position thereof, comprising:
obtaining (403, 504) global positioning system signals from a satellite based global positioning system; **characterized by**:
maintaining a communication with a terminal connected to a network having access to global positioning system assistance data;
receiving (402, 503) global positioning system assistance data from said terminal, and
performing (404, 405; 505, 506) a position calculation based on the global positioning system signals and the global positioning system assistance data for generating position data pertaining to said electronic device.

2. The method according to claim 1, further comprising, before the step of receiving:
transmitting (501) a request, such as a data command, to the terminal for requesting the terminal to acquire global positioning system assistance data from the network and to further transfer the global positioning system assistance data to the electronic device.

3. The method according to claim 1 or 2, further comprising:
transmitting (404, 505) progress information about the status of the position calculation to the terminal.

4. The method according to any of the preceding claims, further comprising:
transmitting (406, 507) the position data to the terminal.

5. A method performed by a terminal for assisting in determining the position of an electronic device, the electronic device having access to global positioning system signals from a satellite based global positioning system, comprising:
acquiring (401, 502) global positioning system assistance data from a network having access to global positioning system assistance data, **characterized by:**
maintaining a communication with the electronic device, and
transmitting (402, 503) said global positioning system assistance data from the terminal to the electronic device.

6. The method according to claim 5, further comprising, before the step of acquiring:
receiving (501) a request from the electronic device, said request requesting the terminal to acquire global positioning system assistance data from the network and to transfer the global positioning system assistance data to the electronic device.

7. The method according to claim 5 or 6, wherein the step of acquiring global positioning system assistance data from the network is performed by periodically downloading the global positioning system assistance data, possibly in response to receiving the request from the electronic device.

8. The method according to any of the claims 5-7, wherein the step of transmitting said global positioning system assistance data comprises transmitting a message which encapsulates said global positioning system assistance data into the message.

9. The method according to any of the claims 5-8, wherein the step of transmitting said global positioning system assistance data further comprises:
transmitting a request for requesting the electronic device to return progress information about the status of a position calculation and eventually position data pertaining to said electronic device.

10. The method according to any of the preceding claims, wherein the satellite based global positioning system is a system selected from the group comprising: GPS, GLONASS, and GALILEO.

11. The method according to any of the preceding claims, wherein the electronic device is a device selected from the group comprising: a peripheral accessory device, a GPS accessory device, a headset, a computer, a vehicle tracking device, a watch, a portable standalone device with GPS capability, a Personal Digital Assistant (PDA).

12. The method according to any of the preceding claims, wherein the terminal is selected from the group comprising: a portable mobile radio communication equipment, a mobile telephone, a cellphone, a pager, a smartphone, a communicator, a computer, a computer having GSM capability, a computer having telephone capability, an electronic organizer, a portable electronic equipment in a vehicle, and a cellphone equipment in a vehicle.

13. A computer program product comprising computer program code means for executing the method according to any of claims 1-12, when said computer program code means are run by a device having computer capabilities.

14. An electronic device (3) configured for receiving global positioning system signals from a satellite based global positioning system **characterized by**:
a connecting device (33, 34) operable to establish and maintain communication with a terminal for receiving global positioning system assistance data from said terminal, and
a processing unit (35) configured to perform a position calculation based on said global positioning system signals and said global positioning system assistance data for generating position data pertaining to said electronic device.

15. The electronic device (3) according to claim 14, wherein the connecting device (33,34) is a device selected from the group comprising: a transceiver (33) configured for short-range communication, and a connector (34) configured to connect the electronic device to a terminal over a wired connection.

16. A terminal (1) configured to acquire global positioning assistance data from a network **charaeterized by** a connecting device (10, 12) configured to transmit said global positioning assistance data to an electronic device.

17. The terminal (1) according to claim 16, wherein the connecting device is a device selected from the group comprising: a transceiver (10) configured for short-range communication, and a connector (12) configured to connect the terminal to a electronic device over a wired connection.
